# EUROPÄISCHE PATENTANMELDUNG

(11) **EP 2 921 758 A1**
(43) Veröffentlichungstag der Anmeldung: **23.09.2015**
(21) Anmeldenummer: 14199954.0
(22) Anmeldetag: 23.12.2014
(51) Int. Cl.: F16L 37/091, F16L 37/098, F16L 37/133, F16L 37/138

(54) **Steckkupplungselement**

(30) Priorität: 21.03.2014 DE 102014103888
(71) Anmelder: NORMA Germany GmbH, 63477 Maintal (DE)
(72) Erfinder: Henrich, Detlef, 63694 Limeshain (DE); Krauß, Mathias, 61130 Nidderau (DE)
(74) Vertreter: Patentanwälte Olbricht Buchhold Keulertz

(57) **Zusammenfassung**

Steckkupplungselement (1) mit einem Grundkörper (2), der eine Anschlussgeometrie (3) für eine Fluidleitung und eine Aufnahmeöffnung (5) aufweist, wobei im Bereich der Aufnahmeöffnung (5) eine Krallenanordnung (6) angeordnet ist, die mehrere in Umfangsrichtung verteilt angeordnete Krallen (7) aufweist, die radial von außen nach innen kippbar sind.

## Beschreibung

Die Erfindung betrifft ein Steckkupplungselement mit einem Grundkörper, der eine Anschlussgeometrie für eine Fluidleitung und eine Aufnahmeöffnung aufweist.

Ein derartiges Steckkupplungselement ist beispielsweise aus DE 10 2006 047 882 B3 bekannt.

Ein derartiges Steckkupplungselement wird beispielsweise verwendet, um eine Fluidleitung, die mit einem derartigen Steckkupplungselement versehen ist, mit einem Anschlussstutzen zu verbinden. Hierzu wird der Grundkörper mit seiner Aufnahmeöffnung auf den Anschlussstutzen aufgeschoben. Der Monteur muss dabei die Kraft eines Verriegelungsmechanismus überwinden, die im bekannten Fall notwendig ist, um einen Federring aufzuspreizen, der eine Verriegelungseinrichtung bildet. Wenn der Anschlussstutzen weit genug in den Grundkörper eingeführt worden ist, dann kann der Federring mit einem Schenkel in eine Nut am Anschlussstutzen einrasten.

Da man relativ hohe Kräfte beim Aufstecken des Steckkupplungselements auf den Anschlussstutzen aufbringen muss, ist die Montage mühsam.

Der Erfindung liegt die Aufgabe zugrunde, ein Steckkupplungselement anzugeben, das einfach zu montieren ist.

Diese Aufgabe wird bei einem Steckkupplungselement der eingangs genannten Art dadurch gelöst, dass im Bereich der Aufnahmeöffnung eine Krallenanordnung angeordnet ist, die mehrere in Umfangsrichtung verteilt angeordnete Krallen aufweist, die radial von außen nach innen kippbar sind.

Die Krallen weisen radial nach innen vorstehende Abschnitte auf. Zur Montage sind die Krallen in ihre radial äußere Position gekippt. Die radial nach innen vorstehenden Abschnitte der Krallen geben dann einen lichten Raum frei, durch den der Anschlussstutzen in die Aufnahmeöffnung eingeführt werden kann. Wenn das Steckkupplungselement und der Anschlussstutzen weit genug ineinander gesteckt worden sind, dann werden die Krallen radial von außen nach innen gekippt, so dass die radial nach innen vorstehenden Abschnitte der Krallen in eine Nut am Anschlussstutzen eingreifen können. Sobald die Krallen mit ihren radial nach innen vorstehenden Abschnitten in die Nut eingetreten sind, kann das Steckkupplungselement nicht mehr vom Anschlussstutzen abgezogen werden. Zum Aufstecken des Steckkupplungselements auf den Anschlussstutzen sind allerdings keine höheren Kräfte erforderlich. Die Verriegelung des Steckkupplungselements auf dem Anschlussstutzen erfolgt nach dem Aufschieben einfach dadurch, dass die Krallen radial von außen nach innen gekippt werden.

Vorzugsweise sind die Krallen an einem Krallenring angeordnet, der am Grundkörper befestigt ist. Dies erleichtert die Montage. Die Krallen können beispielsweise einstückig mit dem Krallenring ausgebildet sein.

Vorzugsweise sind die Krallen mit einer Vorspannung radial nach außen am Grundkörper angeordnet. Man muss lediglich zum Verriegeln des Steckkupplungselements auf den Anschlussstutzen eine Kraft von radial außen nach radial innen auf die Krallen wirken lassen. Eine Entriegelung erfolgt automatisch dann, wenn diese Kraft nicht mehr vorliegt. Damit wird auch die Demontage einfach gemacht.

Vorzugsweise weist der Grundkörper eine radial nach außen offene Umfangsnut auf, in der der Krallenring angeordnet ist. Der Krallenring bildet dann sozusagen einen Fußteil der Krallen, der radial nach innen ragt und damit alle Krallen am Grundkörper festlegt. In der Verbindung zwischen dem Krallenring und den Krallen lässt sich bereits eine gewisse Vorspannung einbringen. So können die Krallen beispielsweise gegenüber dem Krallenring nach innen gebogen werden, wenn sie radial von außen nach innen kippen. Eine andere Möglichkeit besteht darin, den Krallenring und die Krallen gemeinsam kippen zu lassen. Der Krallenring kann in Umfangsrichtung unterbrochen sein, um die Montage zu erleichtern.

Hierbei ist bevorzugt, dass der Krallenring in Axialrichtung der Aufnahmeöffnung eine geringere Dicke als die Umfangsnut aufweist. Damit kann der Krallenring in der Aufnahmeöffnung kippen, was das Kippen der Krallen selbst erleichtert.

Vorzugsweise ist eine Schieberhülse vorgesehen, die relativ zum Grundkörper bewegbar ist und in einer ersten Position radial nach innen auf die Krallen einwirkt und in einer zweiten Position einen Raum für ein Kippen der Krallen radial nach außen freilässt. Die Schieberhülse ist ein relativ einfaches Mittel, mit dem man die Krallen nicht nur gemeinsam radial nach innen bewegen kann, sondern die Krallen auch in der radial nach innen gekippten Stellung festhalten kann. Solange sich die Schieberhülse in der ersten Position befindet, können die Krallen nicht radial nach außen kippen und die Verriegelung zum Anschlussstutzen lösen.

Vorzugsweise ist die Schieberhülse mit einer Komponente in Axialrichtung der Aufnahmeöffnung bewegbar. Die Schieberhülse wird also, nachdem das Steckkupplungselement auf den Anschlussstutzen aufgeschoben worden ist, weiter in Richtung auf den Anschlussstutzen bewegt, so dass der Monteur im Grunde nur eine einzige Bewegung durchführen muss, um das Steckkupplungselement auf den Anschlussstutzen aufzuschieben und es dort zu verriegeln.

Vorzugsweise ist die Schieberhülse mit einer Komponente in Umfangsrichtung der Aufnahmeöffnung bewegbar. In diesem Fall kann die Schieberhülse auf dem Grundkörper in Umfangsrichtung verdreht werden. In einer besonders bevorzugten Ausgestaltung ist vorgesehen, dass man zum Bewegen der Schieberhülse von der zweiten Position in die erste Position eine Kombination einer Bewegung in axialer Richtung und in Umfangsrichtung durchführt.

Hierbei ist vorteilhafterweise vorgesehen, dass die Schieberhülse in mindestens einer Führungsnut am Grundkörper geführt ist. Damit ist eine Bewegungsbahn der Schieberhülse am Grundkörper vorgegeben. Die Schieberhülse kann beispielsweise einen radial nach innen weisenden Vorsprung aufweisen, der sich in der Nut befindet.

Vorzugsweise ist die Nut zumindest abschnittsweise schraubenlinienförmig geführt. Durch die "schräge" Nut wird automatisch sichergestellt, dass die Schieberhülse bei einer Bewegung in Axialrichtung der Aufnahmeöffnung gleichzeitig eine gewisse Drehbewegung in Umfangsrichtung durchführt.

Vorzugsweise weist die Schieberhülse mindestens eine Öffnung auf, in die in der ersten Position der Schieberhülse eine Kralle eintritt. Damit wird die Schieberhülse gegenüber der Krallenanordnung verriegelt, d.h. die Schieberhülse wird durch mindestens eine Kralle in der Verriegelungsposition, also in der ersten Position, festgehalten. Zum Lösen der Verriegelung muss dann diese Kralle aus der Öffnung herausgedrückt werden, also radial nach innen.

Vorzugsweise weist die Kralle einen radialen Vorsprung auf, der in der ersten Position in die Öffnung eintritt. Damit kann man auch die Kralle, die zum Verriegeln der Schieberhülse gegenüber der Krallenanordnung verwendet wird, zum Verriegeln des Steckkupplungselements mit dem Anschlussstutzen verwenden. Aufgrund des Vorsprungs, der in die Öffnung eintritt, muss die entsprechende Kralle nicht allzu weit radial nach außen federn, um die Verriegelung zwischen der Krallenanordnung und der Schieberhülse zu bewirken. Natürlich können in Umfangsrichtung verteilt mehrere Öffnungen in der Schieberhülse vorgesehen sein und man kann eine entsprechende Anzahl von "Verriegelungskrallen" vorsehen.

Die Erfindung wird im Folgenden anhand eines bevorzugten Ausführungsbeispiels in Verbindung mit der Zeichnung beschrieben. Hierin zeigen:
- Fig. 1: ein Steckkupplungselement in geöffnetem Zustand,
- Fig. 2: ein schematischer Schnitt durch das Steckkupplungselement und einen Anschlussstutzen,
- Fig. 3: den Schnitt nach Fig. 2 mit dem aufgeschobenen Steckkupplungselement,
- Fig. 4: den Schnitt nach Fig. 2 mit dem verriegelten Steckkupplungselement,
- Fig. 5: eine perspektivische Darstellung des Steckkupplungselements in verriegelter Stellung und
- Fig. 6: eine vergrößerte Darstellung des Steckkupplungselements auf dem Stutzen und
- Fig. 7: eine Krallenanordnung in zwei verschiedenen Zuständen.

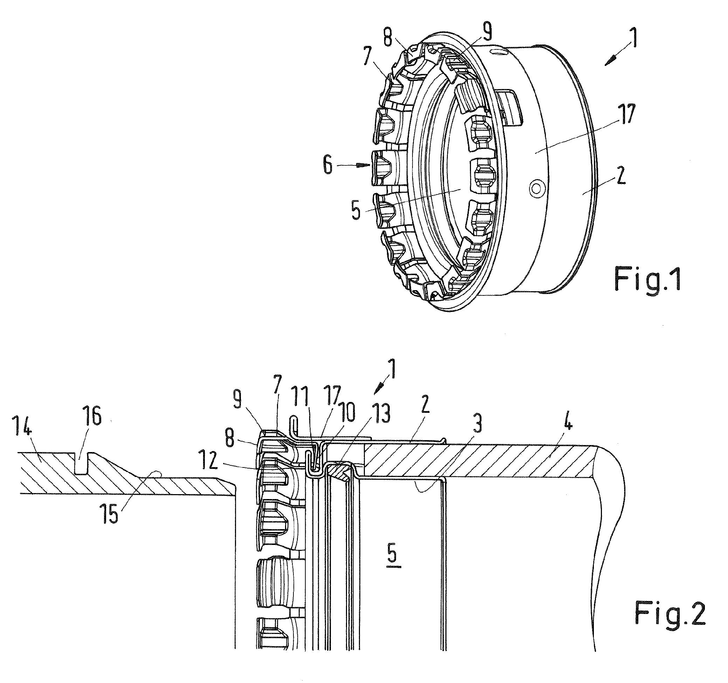

Fig. 1 zeigt in schematischer perspektivischer Darstellung ein Steckkupplungselement 1 mit einem Grundkörper 2, der eine Anschlussgeometrie 3 für eine Fluidleitung 4 (Fig. 2) und eine Aufnahmeöffnung 5 aufweist.

Im Bereich der Aufnahmeöffnung 5 ist eine Krallenanordnung 6 angeordnet. Die Krallenanordnung 6 weist eine Vielzahl von in Umfangsrichtung verteilt angeordneten Krallen 7 auf. Die Krallen 7 sind in Umfangsrichtung voneinander getrennt. Jede Kralle 7 weist an ihrem vom Grundkörper 2 abgewandten Ende einen radial nach innen vorstehenden Abschnitt 8 auf, der als ebene Platte ausgebildet sein kann. Ferner kann jede Kralle an ihrer radialen Außenseite eine oder mehrere Sicken 9 aufweisen, die zur Versteifung der Kralle dienen.

Wie aus Fig. 2 zu erkennen ist, sind die Krallen 7 an einem Krallenring 10 befestigt. Die Krallen 7 können mit dem Krallenring 10 einteilig ausgebildet sein. Der Krallenring 10 kann in Umfangsrichtung eine Unterbrechung aufweisen, um die Montage zu erleichtern. Der Grundkörper 2 weist an seinem von der Anschlussgeometrie 3 abgewandten axialen Ende eine radial nach außen offene Nut 11 auf, in der der Krallenring 10 angeordnet ist. Der Krallenring 10 ist eine Ringscheibe, deren Dicke in axialer Richtung kleiner ist als die axiale Erstreckung der Nut 11. Dementsprechend kann der Krallenring 10 in der Nut kippen. Der Grundkörper 2 ist im vorliegenden Teil aus einem gebogenen Blech gebildet. Die Nut 11 ist dadurch gebildet, dass ein Ende 12 des Grundkörpers 2 radial nach außen umgebogen ist. Sie kann auch auf andere Weise hergestellt werden, z.B. gefräst, geschnitten oder geformt.

In der Aufnahmeöffnung ist eine Dichtung 13 angeordnet.

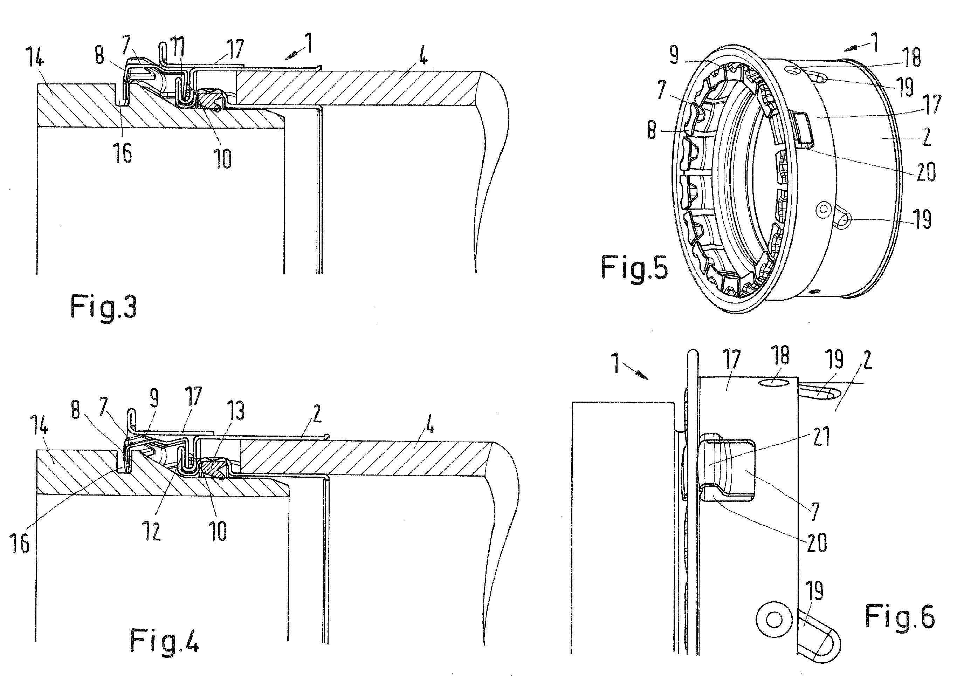

In Fig. 2 ist das Steckkupplungselement 1 vor einem Anschlussstutzen 14 dargestellt. Der Anschlussstutzen 14 weist einen Einsteckbereich 15 auf, auf den das Steckkupplungselement 1 aufgeschoben werden kann und an dem die Dichtung 13 im aufgeschobenen Zustand anliegt. Ferner weist der Anschlussstutzen 14 eine umlaufende Nut 16 auf, in die die radial nach innen ragenden Abschnitte 8 der Krallen 7 im verriegelten Zustand (Fig. 4) hineinragen.

Das Steckkupplungselement 1 weist ferner eine Schieberhülse 17 auf, die auf dem Grundkörper 2 beweglich gelagert ist. Die Bewegungsmöglichkeit der Schieberhülse 17 auf dem Grundkörper 2 ist allerdings beschränkt. Die Schieberhülse 17 weist in Umfangsrichtung verteilt mehrere durch Eindrückungen 18 gebildete Vorsprünge auf, die in Führungsnuten 19 am Grundkörper 2 hineinragen. Die Führungsnuten 19 verlaufen schraubenlinienförmig oder "schräg". Wenn also die Schieberhülse 17 aus der in Fig. 1 dargestellten Position in die in Fig. 5 dargestellte Position bewegt wird, dann ist dies eine Bewegung, die eine Komponente in axialer Richtung (bezogen auf die Achse der Aufnahmeöffnung 5) und eine Komponente in Umfangsrichtung, ebenfalls bezogen auf die Achse der Aufnahmeöffnung 5, enthält.

Fig. 3 zeigt das Steckkupplungselement 1, das soweit auf den Anschlussstutzen 14 aufgeschoben worden ist, dass die radial nach innen ragenden Abschnitte 8 der Krallen 7 sich in der axialen Position der Nut 16 befinden. Dies ist möglich, weil die Krallen 7 noch radial nach außen gekippt sind und somit eine lichte Weite oder Öffnung freigeben, durch die der Anschlussstutzen 14 bewegt werden kann. Der Krallenring 10 steht schräg, also gekippt, in der Umfangsnut 11.

Wenn man nun die Schieberhülse 17 auf dem Grundkörper 2 in Richtung des Anschlussstutzens 14 bewegt, dann führt diese Bewegung dazu, dass die Schieberhülse 17 über die Sicken 9 auf die Krallen 7 wirkt und diese soweit radial nach innen kippt, dass die radial nach innen vorstehenden Abschnitte 8 in die Nut 16 am Anschlussstutzen 14 eintreten. In dieser Verriegelungsposition, die auch als "erste Position" bezeichnet werden kann, wirkt also die Schieberhülse 17 radial nach innen auf die Krallen 7 ein und hält die radial nach innen vorstehenden Abschnitte 8 der Krallen 7 in der Nut 16 des Anschlussstutzens 14 fest.

Wie man durch einen Vergleich zwischen den Fig. 3 und 4 feststellen kann, ist der Krallenring 10 bei dieser Kippbewegung der Krallen 7 aufgerichtet worden. Vorzugsweise kippt der Krallenring 10 über die aufgerichtete Position hinaus in die entgegengesetzte Schräglage. Er liegt dann am Ende 12 des Grundkörpers 2 an. Gleichzeitig wird die Verbindung zwischen den Krallen 7 und dem Krallenring 10 etwas elastisch aufgebogen, so dass die Krallen 7 gegenüber dem Grundkörper 2 mit einer Vorspannung radial nach außen versehen sind. Diese Vorspannung kann aber nicht zu einem Kippen der Krallen 7 radial nach außen führen, weil eine derartige Bewegung durch die Schieberhülse 17 blockiert wird.

Wie man insbesondere in den Fig. 5 und 6 erkennen kann, weist die Schieberhülse 17 in ihrer Umfangswand mindestens eine Öffnung 20 auf, in die in der ersten Position eine Kralle 7 mit einem Vorsprung 21 hineinragt und einrastet. Da die Schieberhülse 17 bei ihrer Bewegung aus der in Fig. 4 dargestellten ersten Position in die in Fig. 2 oder 3 dargestellte zweite Position, in der sie einen Raum zum Bewegen der Krallen 7 radial nach außen freigibt, eine Drehbewegung erfordert, eine derartige Drehbewegung aber durch den Vorsprung 21 der durch die Öffnung ragenden Kralle 7 blockiert ist, lässt sich die Schieberhülse 17 nicht ohne weiteres aus der ersten Position in die zweite Position bewegen. Wenn ein Monteur die mit Hilfe des Steckkupplungselements 1 hergestellte Kupplungsverbindung wieder lösen möchte, müsste er zunächst die Kralle 7 mit dem Vorsprung 21 radial nach innen drücken, um eine Drehbewegung der Schieberhülse 17 auf den Grundkörper 2 zu ermöglichen.

Wenn die Schieberhülse 17 in die zweite Position (Fig. 2 und 3) bewegt worden ist, kippen die Krallen 7 radial wieder nach außen, so dass die radial nach innen ragenden Abschnitte 8 aus der Nut 16 des Anschlussstutzens 14 freikommen. In diesem Zustand kann das Steckkupplungselement 1 von dem Anschlussstutzen 14 abgezogen werden.

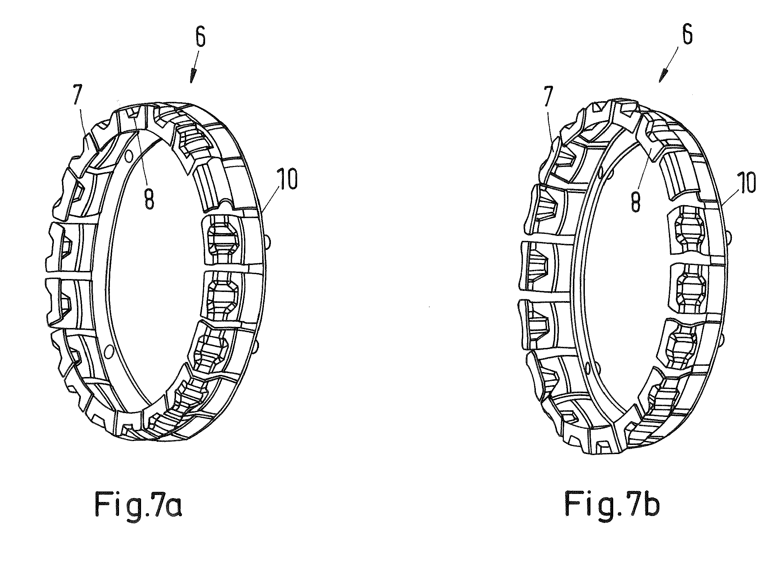

Fig. 7a zeigt die Krallenanordnung 6 in einem verriegelten Zustand, während die Fig. 7b die Krallenanordnung 6 in einem geöffneten Zustand zeigt.

Im verriegelten Zustand nach Fig. 7a sind die Krallen 7 radial einwärts gekippt, so dass die Abschnitte 8 einen Raum begrenzen, der kleiner ist als im offenen Zustand, wo der von den Abschnitten 8 der Krallen 7 begrenzte Raum einen größeren Durchmesser hat. Im geöffneten Zustand nach Fig. 7b kann das Steckkupplungselement 1 von dem Anschlussstutzen 14 abgezogen werden. Dies ist im verriegelten Zustand nach Fig. 7a nicht möglich.

Der Krallenring 10 ist vorzugsweise aus einem elastischen oder sogar federnden Material. Der Krallenring 10 kann aus einem Metall, beispielsweise Federstahl, oder aus einem Kunststoff mit entsprechenden Eigenschaften gebildet sein.

Zur Montage des Steckkupplungselements 1 auf dem Anschlussstutzen 14 muss sich die Schieberhülse 17 in der zweiten Position befinden, so dass die Krallen 7 radial nach außen gekippt sind. Der Monteur kann dann das Steckkupplungselement 1 auf den Anschlussstutzen 14 aufschieben. Hierbei muss er lediglich eine Kraft aufbringen, die die Reibung der Dichtung 13 auf dem Anschlussstutzen 14 überwindet. Diese Kraft ist aber geringer als eine beispielsweise zum Aufspreizen von Befestigungselementen notwendige Kraft.

Erst wenn sich das Steckkupplungselement in der gewünschten Montageposition befindet, wird die Schieberhülse 17 auf dem Grundkörper 2 bewegt und kippt damit die Krallen 7 radial nach innen, so dass die radial nach innen vorstehenden Abschnitte 8 in die Nut 16 eintreten und das Steckkupplungselement 1 dann auf dem Anschlussstutzen 14 festhalten. In dieser Position rastet der Vorsprung 21 in die Öffnung 20 in der Schieberhülse 17 ein, so dass eine Bewegung der Schieberhülse 17 in die zweite Position nicht mehr möglich ist. Ein versehentliches Lösen des Steckkupplungselements zum Anschlussstutzen 14 wird damit ausgeschlossen.

Beim Kippen der Krallen 7 radial nach innen und gegebenenfalls auch bei der Bewegung der Krallen 7 radial nach außen ergibt sich vorzugsweise ein knackendes Geräusch, wie es beispielsweise von einem Kinderspielzeug "Knack-Frosch" bekannt ist. Damit wird einem Monteur auch akustisch zuverlässig angezeigt, ob die Verriegelung in gewünschter Weise erfolgt ist oder nicht. Wenn er das Knack-Geräusch hört, kann er sicher sein, dass die Krallen 7 radial nach innen gekippt oder gesprungen sind. Wenn hingegen diese Bewegung der Krallen 7 nicht möglich ist, weil beispielsweise die Nut 16 durch einen Fremdkörper blockiert ist, kann das Knack-Geräusch nicht entstehen.

## Patentansprüche

1. Steckkupplungselement (1) mit einem Grundkörper (2), der eine Anschlussgeometrie (3) für eine Fluidleitung (4) und eine Aufnahmeöffnung (5) aufweist, **dadurch gekennzeichnet, dass** im Bereich der Aufnahmeöffnung (5) eine Krallenanordnung (6) angeordnet ist, die mehrere in Umfangsrichtung verteilt angeordnete Krallen (7) aufweist, die radial von außen nach innen kippbar sind.

2. Steckkupplungselement nach Anspruch 1, **dadurch gekennzeichnet, dass** die Krallen (7) an einem Krallenring (10) angeordnet sind, der am Grundkörper (2) befestigt ist.

3. Steckkupplungselement nach Anspruch 2, **dadurch gekennzeichnet, dass** die Krallen (7) mit einer Vorspannung radial nach außen am Grundkörper (2) befestigt sind.

4. Steckkupplungselement nach Anspruch 2 oder 3, **dadurch gekennzeichnet, dass** der Grundkörper (2) eine radial nach außen offene Umfangsnut (11) aufweist, in der der Krallenring (10) angeordnet ist.

5. Steckkupplungselement nach Anspruch 4, **dadurch gekennzeichnet, dass** der Krallenring (10) in Axialrichtung der Aufnahmeöffnung (5) eine geringere Dicke als die Umfangsnut (11) aufweist.

6. Steckkupplungselement nach einem der Ansprüche 1 bis 5, **dadurch gekennzeichnet, dass** eine Schieberhülse (17) vorgesehen ist, die relativ zum Grundkörper (2) bewegbar ist und in einer ersten Position radial nach innen auf die Krallen (7) einwirkt und in einer zweiten Position einen Raum für ein Kippen der Krallen (7) radial nach außen freilässt.

7. Steckkupplungselement nach Anspruch 6, **dadurch gekennzeichnet, dass** die Schieberhülse (17) mit einer Komponente in Axialrichtung der Aufnahmeöffnung (5) bewegbar ist.

8. Steckkupplungselement nach Anspruch 6 oder 7, **dadurch gekennzeichnet, dass** die Schieberhülse (17) mit einer Komponente in Umfangsrichtung der Aufnahmeöffnung (5) bewegbar ist.

9. Steckkupplungselement nach einem der Ansprüche 6 bis 8, **dadurch gekennzeichnet, dass** die Schieberhülse (17) in mindestens einer Führungsnut (19) am Grundkörper (2) geführt ist.

10. Steckkupplungselement nach Anspruch 9, **dadurch gekennzeichnet, dass** die Führungsnut (19) zumindest abschnittsweise schraubenlinienförmig geführt ist.

11. Steckkupplungselement nach einem der Ansprüche 6 bis 10, **dadurch gekennzeichnet, dass** die Schieberhülse (17) mindestens eine Öffnung (20) aufweist, in die in der ersten Position der Schieberhülse (17) eine Kralle (7) eintritt.

12. Steckkupplungselement nach Anspruch 11, **dadurch gekennzeichnet, dass** die Kralle (7) einen radialen Vorsprung (21) aufweist, der in der ersten Position in die Öffnung (20) eintritt.
